# EUROPEAN PATENT SPECIFICATION

(11) **EP 3 389 266 B1**
(45) Date of publication and mention of the grant of the patent: **21.12.2022**
(21) Application number: 17165786.9
(22) Date of filing: 10.04.2017
(51) Int. Cl.: H04N 13/30, H04N 13/128, H04N 13/144, H04N 13/341, H04N 13/344, H04N 13/356

(54) **VIEWING APPARATUS AND METHOD**
BETRACHTUNGSVORRICHTUNG UND VERFAHREN
APPAREIL ET PROCÉDÉ DE VISUALISATION

(43) Date of publication of application: 17.10.2018
(73) Proprietor: Vestel Elektronik Sanayi ve Ticaret A.S., 45030 Manisa (TR)
(72) Inventor: EREN, Burak, 45030 Manisa (TR)
(74) Representative: Roberts, David

(56) References cited:
- EP-A2- 2 442 580
- EP-A2- 2 755 392
- US-A1- 2003 060 679
- US-A1- 2015 172 644
- US-A1- 2016 241 842

## Description

### Technical Field

The present disclosure relates to a viewing apparatus and method.

### Background

3D (three dimensional) displays, such as used in 3D televisions, games consoles, cinemas, etc., are constructed and arranged such that a viewer can view their output in 3D. This gives a viewer a more immersive experience of the output content.

A number of different 3D display systems are known. These systems operate by producing two separate image signals, and causing a first of these image signals to be received by only a viewer's left eye, and causing a second of these image signals to be received by only the viewer's right eye.

US 2015/172644 A1 discloses a display device. The display device includes a display panel, a signal processor, and a timing controller. A plurality of pixels is disposed on the display panel. The display panel is configured to display left and right eye images. The signal processor is configured to generate and output left eye and right eye image signals.

US2003/060679A1 discloses a stereoscopic observation system having a stereoscopic mode for stereoscopic observation.

EP 2 442 580 A2 discloses a remote controller for controlling a display apparatus e.g. TV, and has a signal processor that selects one of two dimensional mode and three-dimensional mode based on display mode of display apparatus.

### Summary

According to a first aspect disclosed herein, there is provided method of controlling viewing apparatus for viewing a 3D image, the viewing apparatus comprising shutter glasses which comprise a first viewing window for a viewer's left eye and a second viewing window for a viewer's right eye, the method comprising: controlling the viewing windows such that for 3D viewing of a 3D image, a left side image of the 3D image passes only through the first viewing window and a right side image of the 3D image passes only through the second viewing window; wherein the 3D image is received from a display apparatus in communication with the viewing apparatus, the display apparatus comprising a 3D engine which is configured to control the 3D output of the display apparatus; and characterised in that the method comprises controlling the viewing windows such that when a 2D image or a 3D on-screen display image is being presented in addition to the 3D image, only one of the first and second viewing windows passes light for the images for viewing by a viewer, with the 3D engine continuing to operate such that the display apparatus continues to output the 3D image data when the 2D image or a 3D on-screen display image is displayed by the viewing apparatus.

In an example, the shutter glasses being LCD shutter glasses, the controlling the viewing windows comprising selectively applying a voltage to the viewing windows so as to selectively vary the transparency of the viewing windows.

In an example, the presented 2D image comprises an on-screen display.

In an example, the method comprises receiving information of which of the viewer's left eye and right eye is their dominant eye, and controlling the viewing windows such that said only one of the first and second viewing windows is associated with the viewer's dominant eye.

In an example the 3D image, and 2D image or 3D on-screen display image, are received from a display apparatus in communication with the viewing apparatus, the controlling the viewing windows of the viewing apparatus being in response to control signals received from the display apparatus.

In an example the 3D image, and 2D image or 3D on-screen display image, are received from a display apparatus in communication with the viewing apparatus, the controlling the viewing windows of the viewing apparatus being in response to sensing backlight modulation of the display apparatus.

In a second aspect there is provided a viewing apparatus suitable for viewing a 3D image, the viewing apparatus being shutter glasses and comprising: a first viewing window for a viewer's left eye; a second viewing window for a viewer's right eye; a controller configured to control operation of the viewing windows; wherein, for 3D viewing of a 3D image, the controller is configured to cause the first viewing window to allow a left side image of the 3D image to pass through the first viewing window, and to cause the second viewing window to allow a right side image of the 3D image to pass through the second viewing window; and characterised in that, in response to a determination that a 2D image or a 3D on-screen display image is being presented in addition to the 3D image, the controller is configured to cause only one of the first and second viewing windows to pass light for the images for viewing by a viewer, such that a 3D engine of a display apparatus which provides the 3D image continues to operate such that the display apparatus continues to output the 3D image data when the 2D image or a 3D on-screen display image is displayed by the viewing apparatus.

In an example, the shutter glasses being LCD shutter glasses, the controlling operation of the viewing windows comprising selectively applying a voltage to the viewing windows so as to selectively vary the transparency of the viewing windows.

In an example, the presented 2D image comprises an on-screen display.

In an example, the viewing apparatus is configured to receive information of which of the viewer's left eye and right eye is their dominant eye, and the controller configured to control the viewing windows such that said only one of the first and second viewing windows is associated with the viewer's dominant eye.

In an example, the viewing apparatus comprises a receiver, the controlling the viewing windows of the viewing apparatus being in response to receiving control signals at the receiver from a display apparatus.

In an example, the viewing apparatus comprises a sensor, the controlling the viewing windows of the viewing apparatus being in response to sensing backlight modulation of a display apparatus.

### Brief Description of the Drawings

To assist understanding of the present disclosure and to show how embodiments may be put into effect, reference is made by way of example to the accompanying drawings in which:
Figure 1 schematically shows operation of an example of a 3D imaging system;
Figure 2 shows schematically an example of image output from a 3D display;
Figure 3 schematically shows an example of simultaneous output of 3D and 2D images from a display apparatus; and
Figure 4 schematically shows an example of a system comprising a 3D display apparatus and a 3D viewing apparatus.

### Detailed Description

The present disclosure has applicability to 3D viewing systems, including for example 3D televisions (TVs), games consoles (including handheld gaming devices), cinemas, smart phones, virtual reality (VR) systems, or indeed any other system with 3D ability. The present disclosure has particular applicability to 3D viewing systems in which the viewer uses a shutter glass arrangement for viewing the 3D images.

When viewing for example a television programme a user often wants or needs to bring up a further or additional image, such as an on-screen display (OSD). The OSD enables user interaction including, for example, browsing through a TV menu, checking an electronic program guide (EPG) or other guides provided over the Internet such as Hbb TV (Hybrid Broadcast Broadband TV), browsing through the Internet or World Wide Web, etc. The OSD can be displayed on-screen at the same time as the main image that the viewer is watching (e.g. motion picture of a television programme). Thus the OSD may overlay the played content or be placed to one side of the played content. This allows a user to browse through the OSD whilst the programme is still being played in the background.

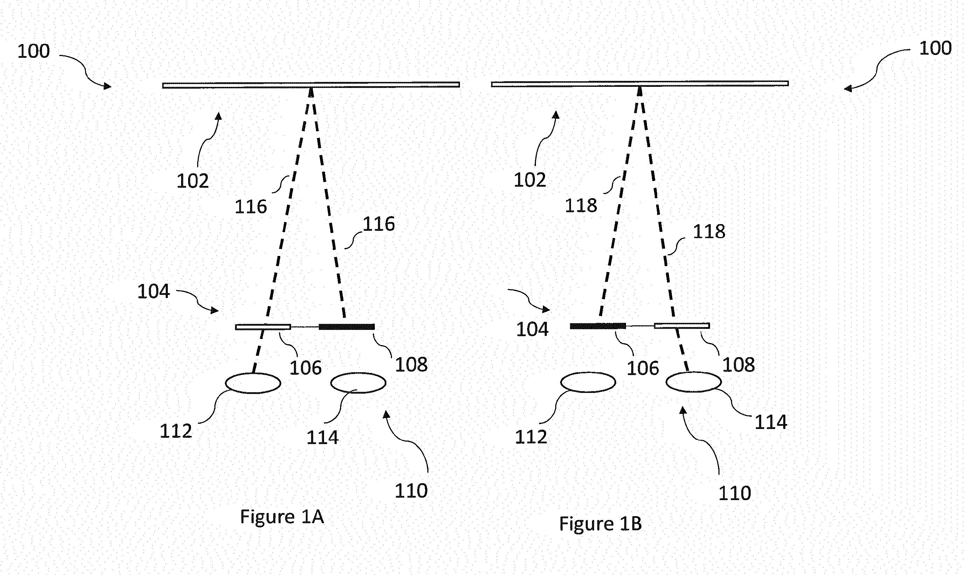

Figures 1A and 1B illustrate a 3D viewing system 100, in plan view. The viewing system 100 comprises a display device 102 and 3D viewing apparatus 104. In this example, the 3D viewing apparatus 104 is shutter glasses. The shutter glasses 104 comprise a left eye window 106 and a right eye window 108. A viewer is shown schematically at 110. The shutter glasses 104 are typically worn by the viewer 110 such that the left eye window 106 is positioned proximate to the viewer's left eye 112, and the right eye window 108 is positioned proximate to the viewer's right eye 114.

The left and right windows 106, 108 of the shutter glasses 104 can be controlled so as to selectively vary the passage of light therethrough, which can therefore control the amount of light incident on the viewer's left and right eyes 112, 114. Controlling of the shutter glasses 104 can be performed for example in response to control signals received from the system 100 e.g. received from the display device 102.

In order for the viewer to perceive the display output in 3D, the viewer's left eye 112 must see only a first image signal from the display (e.g. a left eye signal), and the viewer's right eye 114 must see only a second image signal (or right eye signal) received from the display device 102.

Figure 1A shows the display transmitting a first image signal 116 at a first time instant t1. The first image signal 116 is in this example a left eye signal. Accordingly the shutter glasses 104 have been controlled so as to allow the first image signal 116 to pass through the left eye window 106 of the shutter glasses, so as to be incident on the viewer's left eye 112. At the same time, the right eye window 108 is controlled so as to prevent the left eye signal 116 from being incident on the viewer's right eye 114.

Figure 1B shows a second image signal 118 being transmitted from the display device 102 at a time t2 which is after t1. The second image signal 118 may be considered a right eye image signal. Accordingly the shutter glasses 104 are controlled such that the left eye window 106 does not allow the image signal 118 to pass therethrough. Accordingly the viewer's left eye 112 does not receive the right eye signal 118. The right eye window 108 is controlled to allow the second image signal 118 to be incident on the viewer's right eye 114. Accordingly the viewer's right eye 114 receives the right eye signal 118.

This is then repeated such that the transmission of left and right eye signals from the display device 102 is alternated, with control of the viewing windows 106, 108 of the shutter glasses 104 being correspondingly alternated. This may occur many times per second so as to provide a flicker-free 3D image as perceived by the viewer 110.

The shutter glasses 104 can in general be of any form. For example the viewing windows 106, 108 may be polarised to selectively allow light of different polarisations through. As an alternative, the shutter glasses 104 may be LCD shutter glasses 104 whereby selectively passing a voltage through the viewing windows 106, 108 causes their opacity/transparency to be controlled, in particular effectively opening and closing the viewing windows 106, 108 in an alternating manner.

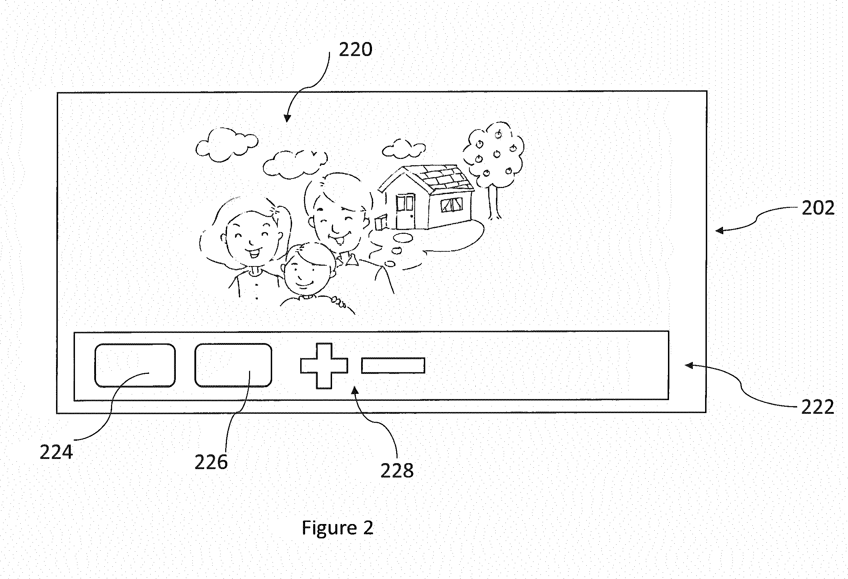

Figure 2 shows a display 202. 3D played content is shown at 220. This may include for example a TV programme or movie, a computer game, etc. As shown in Figure 2 a viewer has brought up or called an OSD 222, for example by pressing a button on a remote control. By way of example only the OSD in this instance comprises a guide 224, Internet browser 226, and volume control 228. The OSD item may be considered a separate image from the scene content 220. The OSD item may be considered to overlay or at least partially overlay the scene content 220.

The OSD 222 may be displayed in 3D, in addition to the displayed 3D content 220. This may cause a problem in that different depths may be used for the OSD 222 and the content 220. This may confuse the user's brain, which cannot easily adapt to the different depths seen through the shutter glasses. This may distract the user or give the user an unpleasent viewing experience.

Alternatively the OSD may be displayed in 2D. This can also be distracting or uncomfortable to the viewer when displayed in conjunction with the 3D scene 220.

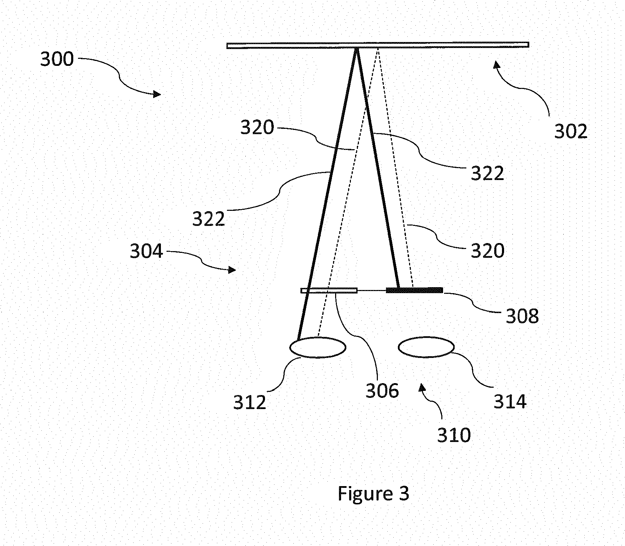

Figure 3 shows schematically an example of a system 300 having a display device 302 and 3D viewing apparatus in the form of shutter glasses 304 according to an embodiment. Light rays for a 3D image (e.g. motion picture image data in a programme or movie) are shown at 320. Light rays for a 2D image or 3D OSD are shown at 322. The 2D image or 3D OSD may be referred to as an additional image i.e. an image in addition to the 3D scene image 220.As explained with respect to Figure 2, the 3D image light rays 320 are generated by the display device 302 in a manner intended to be viewed by the viewer 310 so as to create a 3D effect. The 2D image or 3D OSD light rays 322 are also generated by the display device 302. In order to counteract the distracting effect that simultaneously presenting a 3D image and a 2D image or 3D OSD may have on the user, the 3D viewing apparatus 304 is controlled so that only one of the viewer's left eye and right eye receives both the 3D image light rays 320 and the image light rays 322. The other of the viewer's left and right eye receives neither of the 3D image light rays 320 or the additional image light rays 322. This causes the viewer to see both the scene image (e.g. programme or movie) and the additional image in 2D, thus alleviating the distracting effect while the additional image is displayed in conjunction with the 3D scene content.

In the example of Figure 3 this is achieved by controlling the left window 306 of shutter glasses 304 to allow light through, whilst the right eye window 308 is controlled not to allow light through. Thus only the viewer's left eye 312 views both the scene image light rays 320 and the additional image light rays 322, with the viewer's right eye 314 receiving neither. Of course the shutter glasses 304 may be operated in the opposite manner, where the left window 306 is controlled to prevent light passing through, and the right window 308 is controlled to allow light through, such that only the viewer's right eye 314 receives the two sets of light rays.

In some embodiments, determining which of the left and right windows 306, 308 to "close" or keep "open" to enable the embodiments is based upon a determination of which is the user's dominant eye, and allowing the image light rays 320, 322 to pass only through the window 306, 308 associated with the dominant eye. In some embodiments the shutter glasses 304 are calibrated with the dominant eye information, for example following a configuration step in which the user is taken through a simple eye test, or by requesting the information from the user.

Thus, in embodiments the user perceives both the programme image and the additional image in 2D. However, when the user has called up the additional image (e.g. OSD), for example by operation of a remote control, their attention will naturally be drawn towards the additional image, and therefore there will be limited or no loss of enjoyment of the programme being in 2D whilst the additional image, such as an OSD, is presented by the display device 302.

It may be considered that the 3D viewing apparatus can operate in two modes. A first mode may be considered a mode of normal operation for viewing 3D images, such as that explained with respect to Figures 1A and 1B where the windows are alternately opened and closed to cause the viewer to perceive images in 3D. A second mode is where the 3D viewing apparatus is controlled such that only one of the viewer's left eye and right eye receives the light rays from the display device. The 3D viewing apparatus may switch from the first mode to the second mode in response to an event. In some embodiments, the event is an OSD or 2D image being displayed in conjunction with a 3D image. The viewing apparatus can of course also revert back from the second mode to the first mode. The switching from the second mode to the first mode may be in response to a second event. The second event may be the 2D image no longer being displayed on the display device.

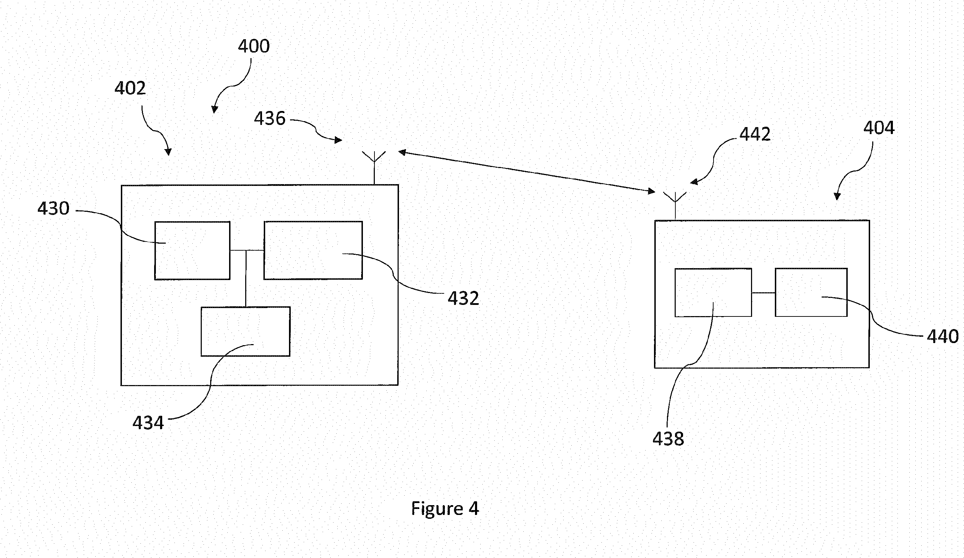

Figure 4 is a schematic diagram of an overall system 400 according to an embodiment. The system 400 comprises display apparatus 402 (e.g. a 3D TV), and 3D viewing apparatus 404 (e.g. shutter glasses). The 3D display apparatus 402 comprises a memory 430 and a processor 432. The 3D display apparatus 402 also comprises a 3D engine 434 for controlling the alternating left and right side images that are presented by the 3D display apparatus. In some embodiments the 3D engine 434 may be comprised within the processor 432. The display apparatus 402 also comprises a transmitter (and optionally a receiver) 436 for transmitting (and receiving) signals.

The 3D viewing apparatus 404 comprises a memory 438 and a processor 440 for controlling the 3D viewing apparatus 404. The 3D viewing apparatus 404 further comprises a receiver (and optionally a transmitter) as shown at 442.

Via the transmitter 436 of the display apparatus 402 and the receiver 442 of the 3D viewing apparatus 404, the display apparatus 402 can transmit control signals to the viewing apparatus 404. This enables the viewing apparatus 404 to synchronise with the 3D output of the display 402, for example to synchronise left and right windows of shutter glasses with left and right images output from the display apparatus 402. Via this communication interface the display apparatus 402 can also signal to the viewing apparatus 404 when an OSD or other 2D image is being present on the screen of the display apparatus 402.

The display apparatus 402 comprises 3D engine 434 which is configured to control the 3D output of the display apparatus 402. In embodiments the 3D engine 434 (and indeed other elements of the processor 432 and the display apparatus 402 as a whole) can continue running as normal, generating 3D output, even when the OSD or 2D image is displayed, as it is the viewing apparatus 404 that is controlled to determine what is viewed by the viewer. This means that the 3D display apparatus 402 does not have to make any alterations to its output of the 3D image data when the OSD or 2D image is displayed, and also means that there is no interruption when the OSD or 2D image is closed down since the 3D display apparatus 402 does not need to switch between 2D and 3D modes for the 3D image output. This reduces the processing burden on the 3D display apparatus 402 and causes no interruption in the normal operation of the 3D display apparatus 402 compared to, for example, causing the display apparatus to switch the 3D image data (e.g. motion picture) content to 2D when the additional image is displayed.

In some embodiments a dedicated control signal is sent from the display apparatus 402 to the 3D viewing apparatus 404 for control thereof. In an alternative embodiment the backlight of the display 402 can be modulated in order to control the 3D viewing apparatus 404. For example the backlight of the display apparatus can be modulated (or "flickered") in a predetermined fashion. In such an example the viewing apparatus 404 comprises a sensor (e.g. a light sensor) for sensing the flickering of the backlight. The viewing apparatus 404 can process the predetermined backlight modulation to determine that the viewing apparatus is to switch to the 2D mode i.e. the mode in which one of the viewing windows is closed.

It will be understood that the processor or processing system or circuitry referred to herein may in practice be provided by a single chip or integrated circuit or plural chips or integrated circuits, optionally provided as a chipset, an applicationspecific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of controlling viewing apparatus (104) for viewing a 3D image, the viewing apparatus (104) comprising shutter glasses which comprise a first viewing window (106) for a viewer's left eye (112) and a second viewing window (108) for a viewer's right eye (114), the method comprising:
controlling the viewing windows (106, 108) such that for 3D viewing of a 3D image (220), a left side image of the 3D image (116) passes only through the first viewing window (106) and a right side image of the 3D image (118) passes only through the second viewing window (108);
wherein the 3D image (220) is received from a display apparatus (102, 402) in communication with the viewing apparatus (104), the display apparatus (102, 402) comprising a 3D engine (434) which is configured to control the 3D output of the display apparatus (102, 402); and
**characterised in that** the method comprises controlling the viewing windows (106, 108) such that when a 2D image or a 3D on-screen display image (222) is being presented in addition to the 3D image (220), only one of the first and second viewing windows (106, 108) passes light for the images for viewing by a viewer during the presentation, with the 3D engine (434) continuing to operate such that the display apparatus (102, 402) continues to output the 3D image data when the 2D image or a 3D on-screen display image (222) is displayed by the viewing apparatus (104).

2. A method according to claim 1, the shutter glasses being LCD shutter glasses, the controlling the viewing windows (106, 108) comprising selectively applying a voltage to the viewing windows (106, 108) so as to selectively vary the transparency of the viewing windows (106, 108).

3. A method according to claim 1 or claim 2, wherein the presented 2D image comprises an on-screen display.

4. A method according to any of claims 1 to 3, comprising receiving information of which of the viewer's left eye (112) and right eye (114) is their dominant eye, and controlling the viewing windows (106, 108) such that said only one of the first and second viewing windows (106, 108) is associated with the viewer's dominant eye.

5. A method according to any of claims 1 to 4 wherein the 3D image (220), and 2D image or 3D on-screen display image (222), are received from the display apparatus (102) in communication with the viewing apparatus (104), the controlling the viewing windows (106, 108) of the viewing apparatus (104) being in response to control signals received from the display apparatus (102).

6. A method according to any of claims 1 to 4 wherein the 3D image (220), and 2D image or 3D on-screen display image (222), are received from the display apparatus (102) in communication with the viewing apparatus (104), the controlling the viewing windows (106, 108) of the viewing apparatus (104) being in response to sensing backlight modulation of the display apparatus (102).

7. Viewing apparatus (104) suitable for viewing a 3D image, the viewing apparatus (104) being shutter glasses and comprising:
a first viewing window (106) for a viewer's left eye (112);
a second viewing window (108) for a viewer's right eye (114);
a controller configured to control operation of the viewing windows;
wherein, for 3D viewing of a 3D image (220), the controller is configured to cause the first viewing window (106) to allow a left side image of the 3D image (116) to pass through the first viewing window (106), and to cause the second viewing window (108) to allow a right side image of the 3D image (118) to pass through the second viewing window (108);
and **characterised in that**, in response to a determination that a 2D image or a 3D on-screen display image (222) is being presented in addition to the 3D image (220), the controller is configured to cause only one of the first and second viewing windows (106, 108) to pass light for the images for viewing by a viewer during the presentation, such that a 3D engine (434) of a display apparatus (102, 402) that is transmitting the 3D image (220) to the viewing apparatus continues to operate such that the display apparatus (102, 402) continues to output the 3D image data when the 2D image or a 3D on-screen display image (222) is displayed by the viewing apparatus (104).

8. Viewing apparatus (104) according to claim 7, the shutter glasses being LCD shutter glasses, the controlling operation of the viewing windows (106, 108) comprising selectively applying a voltage to the viewing windows (106, 108) so as to selectively vary the transparency of the viewing windows (106, 108).

9. Viewing apparatus (104) according to claim 7 or claim 8, arranged such that the presented 2D image comprises an on-screen display.

10. Viewing apparatus (104) according to any of claims 7 to 9, the viewing apparatus (104) configured to receive information of which of the viewer's left eye (112) and right eye (114) is their dominant eye, and the controller configured to control the viewing windows (106, 108) such that said only one of the first and second viewing windows (106, 108) is associated with the viewer's dominant eye.

11. Viewing apparatus (104) according to any of claims 7 to 10, comprising a receiver, the controlling the viewing windows (106, 108) of the viewing apparatus (104) being in response to receiving control signals at the receiver from a display apparatus (102).

12. Viewing apparatus (102) according to any of claims 7 to 10, comprising a sensor, the controlling the viewing windows (106, 108) of the viewing apparatus (102) being in response to sensing backlight modulation of a display apparatus (102).

## Patentansprüche

1. Verfahren zum Steuern einer Betrachtungsvorrichtung (104) zum Betrachten eines 3D-Bildes, wobei die Betrachtungsvorrichtung (104) Verschlussgläser aufweist, die ein erstes Sichtfenster (106) für ein linkes Auge (112) eines Betrachters und ein zweites Sichtfenster (108) für ein rechtes Auge (114) eines Betrachters aufweisen, wobei das Verfahren aufweist:
Steuern der Sichtfenster (106, 108) derart, dass zum 3D-Betrachten eines 3D-Bildes (220) ein linksseitiges Bild des 3D-Bildes (116) nur das erste Sichtfenster (106) passiert und ein rechtsseitiges Bild des 3D-Bildes (118) nur das zweite Sichtfenster (108) passiert;
wobei das 3D-Bild (220) von einer Anzeigevorrichtung (102, 402) in Kommunikation mit der Betrachtungsvorrichtung (104) empfangen wird, wobei die Anzeigevorrichtung (102, 402) eine 3D-Maschine (434) aufweist, die konfiguriert ist, um die 3D-Ausgabe der Anzeigevorrichtung (102, 402) zu steuern; und
**dadurch gekennzeichnet, dass** das Verfahren das Steuern der Sichtfenster (106, 108) derart aufweist, dass, wenn zusätzlich zum 3D-Bild (220) ein 2D-Bild oder ein 3D-Bildschirmanzeigebild (222) präsentiert wird, nur eines der ersten und zweiten Sichtfenster (106, 108) Licht für die Bilder zum Betrachten durch einen Betrachter während der Präsentation durchlässt, wobei die 3D-Maschine (434) weiterhin so arbeitet, dass die Anzeigevorrichtung (102, 402) weiterhin die 3D-Bilddaten ausgibt, wenn das 2D-Bild oder ein 3D-Bildschirmanzeigebild (222) durch die Betrachtungsvorrichtung (104) angezeigt wird.

2. Verfahren nach Anspruch 1, wobei die Verschlussgläser LCD-Verschlussgläser sind, wobei das Steuern der Sichtfenster (106, 108) ein selektives Anlegen einer Spannung an die Sichtfenster (106, 108) aufweist, um die Transparenz der Sichtfenster (106, 108) selektiv zu variieren.

3. Verfahren nach Anspruch 1 oder Anspruch 2, wobei das präsentierte 2D-Bild eine Bildschirmanzeige aufweist.

4. Verfahren nach einem der Ansprüche 1 bis 3, aufweisend ein Empfangen von Informationen, welche des linken Auges (112) und des rechten Auges (114) des Betrachters sein dominantes Auge ist, und ein Steuern der Sichtfenster (106, 108) derart, dass nur das eine der ersten und zweiten Sichtfenster (106, 108) dem dominanten Auge des Betrachters zugeordnet ist.

5. Verfahren nach einem der Ansprüche 1 bis 4, wobei das 3D-Bild (220) und das 2D-Bild oder das 3D-Bildschirmanzeigebild (222) von der Anzeigevorrichtung (102) in Kommunikation mit der Betrachtungsvorrichtung (104) empfangen werden, wobei das Steuern der Sichtfenster (106, 108) der Betrachtungsvorrichtung (104) als Reaktion auf die von der Anzeigevorrichtung (102) empfangenen Steuersignale erfolgt.

6. Verfahren nach einem der Ansprüche 1 bis 4, wobei das 3D-Bild (220) und das 2D-Bild oder das 3D-Bildschirmanzeigebild (222) von der Anzeigevorrichtung (102) in Kommunikation mit der Betrachtungsvorrichtung (104) empfangen werden, wobei das Steuern der Sichtfenster (106, 108) der Betrachtungsvorrichtung (104) als Reaktion auf das Wahrnehmen einer Hintergrundbeleuchtungsmodulation der Anzeigevorrichtung (102) erfolgt.

7. Betrachtungsvorrichtung (104), die zum Betrachten eines 3D-Bildes geeignet ist, wobei die Betrachtungsvorrichtung (104) Verschlussgläser ist und aufweist:
ein erstes Sichtfenster (106) für ein linkes Auge (112) eines Betrachters;
ein zweites Sichtfenster (108) für ein rechtes Auge (114) eines Betrachters;
eine Steuerung, die konfiguriert ist, um den Betrieb der Sichtfenster zu steuern;
wobei zum 3D-Betrachten eines 3D-Bildes (220) die Steuerung konfiguriert ist, um das erste Sichtfenster (106) zu veranlassen, ein linksseitiges Bild des 3D-Bildes (116) durch das erste Sichtfenster (106) passieren zu lassen, und das zweite Sichtfenster (108) zu veranlassen, ein rechtsseitiges Bild des 3D-Bildes (118) durch das zweite Sichtfenster (108) passieren zu lassen;
und **dadurch gekennzeichnet, dass** die Steuerung als Reaktion auf eine Bestimmung, dass zusätzlich zum 3D-Bild (220) ein 2D-Bild oder ein 3D-Bildschirmanzeigebild (222) präsentiert wird, konfiguriert ist, um nur eines der ersten und zweiten Sichtfenster (106, 108) zu veranlassen, Licht für die Bilder zum Betrachten durch einen Betrachter während der Präsentation durchzulassen,
sodass eine 3D-Maschine (434) einer Anzeigevorrichtung (102, 402), die das 3D-Bild (220) an die Betrachtungsvorrichtung übermittelt, weiterhin so arbeitet, dass die Anzeigevorrichtung (102, 402) weiterhin die 3D-Bilddaten ausgibt, wenn das 2D-Bild oder ein 3D-Bildschirmanzeigebild (222) durch die Betrachtungsvorrichtung (104) angezeigt wird.

8. Betrachtungsvorrichtung (104) nach Anspruch 7, wobei die Verschlussgläser LCD-Verschlussgläser sind, wobei der Steuerbetrieb der Sichtfenster (106, 108) ein selektives Anlegen einer Spannung an die Sichtfenster (106, 108) aufweist, um die Transparenz der Sichtfenster (106, 108) selektiv zu variieren.

9. Betrachtungsvorrichtung (104) nach Anspruch 7 oder Anspruch 8, die so ausgemacht ist, dass das präsentierte 2D-Bild eine Bildschirmanzeige aufweist.

10. Betrachtungsvorrichtung (104) nach einem der Ansprüche 7 bis 9, wobei die Betrachtungsvorrichtung (104) konfiguriert ist, um Informationen zu empfangen, welche des linken Auges (112) und des rechten Auges (114) des Betrachters sein dominantes Auge ist, und die Steuerung konfiguriert ist, um die Sichtfenster (106, 108) so zu steuern, dass nur das eine der ersten und zweiten Sichtfenster (106, 108) dem dominanten Auge des Betrachters zugeordnet ist.

11. Betrachtungsvorrichtung (104) nach einem der Ansprüche 7 bis 10, aufweisend einen Empfänger, wobei das Steuern der Sichtfenster (106, 108) der Betrachtungsvorrichtung (104) als Reaktion auf Empfangen von Steuersignalen am Empfänger von einer Anzeigevorrichtung (102) erfolgt.

12. Betrachtungsvorrichtung (102) nach einem der Ansprüche 7 bis 10, aufweisend einen Sensor, wobei das Steuern der Sichtfenster (106, 108) der Betrachtungsvorrichtung (102) als Reaktion auf Wahrnehmen einer Hintergrundbeleuchtungsmodulation einer Anzeigevorrichtung (102) erfolgt.

## Revendications

1. Procédé de commande d'un appareil de visualisation (104) pour visualiser une image en 3D, l'appareil de visualisation (104) comprenant des lunettes à obturateur qui comprennent une première fenêtre de visualisation (106) pour l'œil gauche (112) d'un observateur et une deuxième fenêtre de visualisation (108) pour l'œil droit (114) d'un observateur, le procédé consistant à :
commander les fenêtres de visualisation (106, 108) de sorte que, pour une visualisation en 3D d'une image en 3D (220), une image du côté gauche de l'image en 3D (116) passe uniquement à travers la première fenêtre de visualisation (106) et une image du côté droit de l'image en 3D (118) passe uniquement à travers la deuxième fenêtre de visualisation (108),
dans lequel l'image en 3D (220) est reçue d'un appareil d'affichage (102, 402) en communication avec l'appareil de visualisation (104), l'appareil d'affichage (102, 402) comprenant un moteur 3D (434) qui est configuré pour commander la sortie 3D de l'appareil d'affichage (102, 402), et
**caractérisé en ce que** le procédé consiste à commander les fenêtres de visualisation (106, 108) de sorte que, lorsqu'une image en 2D ou une image en 3D d'affichage à l'écran (OSD) (222) est en train d'être présentée en sus de l'image en 3D (220), seule l'une des première et deuxième fenêtres de visualisation (106, 108) laisse passer de la lumière pour les images destinées à la visualisation par un observateur lors de la présentation, avec le moteur 3D (434) continuant à fonctionner de sorte que l'appareil d'affichage (102, 402) continue à délivrer les données d'image en 3D lorsque l'image en 2D ou une image en 3D d'affichage à l'écran (OSD) (222) est affichée par l'appareil de visualisation (104).

2. Procédé selon la revendication 1, les lunettes à obturateur étant des lunettes à obturateur LCD, la commande des fenêtres de visualisation (106, 108) consistant à appliquer sélectivement une tension aux fenêtres de visualisation (106, 108) de manière à faire varier sélectivement la transparence des fenêtres de visualisation (106, 108).

3. Procédé selon la revendication 1 ou 2, dans lequel l'image en 2D présentée comprend un affichage à l'écran (OSD).

4. Procédé selon l'une quelconque des revendications 1 à 3, consistant à recevoir des informations sur lequel de l'œil gauche (112) et l'œil droit (114) de l'observateur est son œil dominant, et à commander les fenêtres de visualisation (106, 108) de sorte que ladite seule l'une des première et deuxième fenêtres de visualisation (106, 108) est associée à l'œil dominant de l'observateur.

5. Procédé selon l'une quelconque des revendications 1 à 4, dans lequel l'image en 3D (220), et l'image en 2D ou l'image en 3D d'affichage à l'écran (OSD) (222), sont reçues de l'appareil d'affichage (102) en communication avec l'appareil de visualisation (104), la commande des fenêtres de visualisation (106, 108) de l'appareil de visualisation (104) étant en réponse à des signaux de commande reçus de l'appareil d'affichage (102).

6. Procédé selon l'une quelconque des revendications 1 à 4, dans lequel l'image en 3D (220), et l'image en 2D ou l'image en 3D d'affichage à l'écran (OSD) (222), sont reçues de l'appareil d'affichage (102) en communication avec l'appareil de visualisation (104), la commande des fenêtres de visualisation (106, 108) de l'appareil de visualisation (104) étant en réponse à la détection d'une modulation de rétroéclairage de l'appareil d'affichage (102).

7. Appareil de visualisation (104) approprié pour visualiser une image en 3D, l'appareil de visualisation (104) étant des lunettes à obturateur et comprenant :
une première fenêtre de visualisation (106) pour l'œil gauche d'un observateur (112) ;
une deuxième fenêtre de visualisation (108) pour l'œil droit d'un observateur (114) ;
un contrôleur configuré pour commander le fonctionnement des fenêtres de visualisation,
dans lequel, pour une visualisation en 3D d'une image en 3D (220), le contrôleur est configuré pour que la première fenêtre de visualisation (106) puisse laisser passer une image du côté gauche de l'image en 3D (116) à travers la première fenêtre de visualisation (106), et pour que la deuxième fenêtre de visualisation (108) puisse laisser passer une image du côté droit de l'image en 3D (118) à travers la deuxième fenêtre de visualisation (108),
et **caractérisé en ce que**, en réponse à une détermination qu'une image en 2D ou une image en 3D d'affichage à l'écran (OSD) (222) est en train d'être présentée en sus de l'image en 3D (220), le contrôleur est configuré pour que seule l'une des première et deuxième fenêtres de visualisation (106, 108) laisse passer de la lumière pour les images destinées à la visualisation par un observateur lors de la présentation, de sorte qu'un moteur 3D (434) d'un appareil d'affichage (102, 402) qui transmet l'image en 3D (220) à l'appareil de visualisation continue de fonctionner de sorte que l'appareil d'affichage (102, 402) continue à délivrer les données d'image en 3D lorsque l'image en 2D ou une image en 3D d'affichage à l'écran (OSD) (222) est affichée par l'appareil de visualisation (104).

8. Appareil de visualisation (104) selon la revendication 7, les lunettes à obturateur étant des lunettes à obturateur LCD, la commande du fonctionnement des fenêtres de visualisation (106, 108) consistant à appliquer sélectivement une tension aux fenêtres de visualisation (106, 108) de manière à faire varier sélectivement la transparence des fenêtres de visualisation (106, 108).

9. Appareil de visualisation (104) selon la revendication 7 ou 8, étant agencé de sorte que l'image en 2D présentée comprend un affichage à l'écran (OSD).

10. Appareil de visualisation (104) selon l'une quelconque des revendications 7 à 9, l'appareil de visualisation (104) étant configuré pour recevoir des informations sur lequel de l'œil gauche (112) et l'œil droit (114) de l'observateur est son œil dominant, et le contrôleur étant configuré pour commander les fenêtres de visualisation (106, 108) de sorte que ladite seule l'une des première et deuxième fenêtres de visualisation (106, 108) est associée à l'œil dominant de l'ob servateur.

11. Appareil de visualisation (104) selon l'une quelconque des revendications 7 à 10, comprenant un récepteur, la commande des fenêtres de visualisation (106, 108) de l'appareil de visualisation (104) étant en réponse à la réception, au niveau du récepteur, de signaux de commande provenant d'un appareil d'affichage (102).

12. Appareil de visualisation (104) selon l'une quelconque des revendications 7 à 10, comprenant un capteur, la commande des fenêtres de visualisation (106, 108) de l'appareil de visualisation (104) étant en réponse à la détection d'une modulation de rétroéclairage d'un appareil d'affichage (102).
